# EUROPEAN PATENT APPLICATION

(11) **EP 1 052 751 A1**
(43) Date of publication of application: **15.11.2000**
(21) Application number: 99830288.9
(22) Date of filing: 12.05.1999
(51) Int. Cl.: H02G 3/04, A47B 96/06, A47B 97/00

(54) **Multi-purpose equipped raceway for kitchen furniture for installation under the cabinets**

(71) Applicant: MOBILI BERLONI - S.p.A., I-61100 Pesaro (IT)
(72) Inventor: Favaretto, Paolo, Padova (IT)
(74) Representative: Baldi, Claudio

(57) **Abstract**

This invention concerns an equipped raceway for installation under modular kitchen cabinets designed to support tool-holder frames or shelves, support and house electrical or telephone sockets or lamps with screen or hold against the wall the panels used to line the wall section which remains visible between the bases and the cabinets of a modular kitchen.

## Description

This patent application for industrial invention concerns an equipped raceway to be installed preferably under modular kitchen cabinets, which can be used for many different functions, such as to support tool-holder frames or shelves, support and house electrical or telephone sockets or lamps with screen, or hold against the wall the panels used to line the wall section which remains visible between the bases and the cabinets of the modular kitchen. The raceway according to the present invention is intended to radically change the current technique which uses long metal strips fixed to the wall in horizontal position under the cabinets, to which baskets or shelves are hung in order to hold the tools that are most commonly used for the preparation of meals, such as knives, ladles, jars of spices or ingredients, rolls of paper towel, etc.

In any case, the strips are not able to support or house electrical sockets or lamps, which are currently recessed directly into the wall or, in very few cases, fixed under the base panel of the kitchen cabinets. It is obvious that the application of these accessories on the outside of the cabinet base negatively affects the exterior appearance of the modular kitchen, since the design and shape of the kitchen are interrupted and spoiled by the presence of foreign objects, such as boxes with electrical sockets or lamps used to lit the working surface below.

On the other hand, the recessed installation of the electrical boxes into the base panel of the cabinets requires additional expensive work, in order to create slots or niches in the cabinets that must be equipped with the above mentioned accessories.

In view of the above and of the limited function of the metal strips that are currently used under modular kitchen cabinets, a new device has been designed, characterized by high flexibility of use and integration, since it can support or house all the accessories that are usually placed under the cabinets of modular kitchens.

With particular reference to the support of electrical or telephone sockets or lamps, the device according to the present invention features the widest versatility in terms of designing and modification of the system, without requiring any modification to the walls and ensuring easy and fast installation.

The device according to the present invention consists in a raceway made up of a special C channel, whose front is covered with a flat strip which features two longitudinal slots located on the front edge of the lower and upper side of the raceway.

It must be said that these slots can be used to insert shelves, screens, hooks and any other accessory provided with thin hooking elements suitable for being inserted and hooked into the slots.

The dimensions of the raceway allow for the insertion of the standard boxes that are universally used to house electrical switches and sockets. The flat strip that covers the front of the raceway can be cut in the insertion point of each box in the raceway, since the boxes are always provided with a front closing plate which remains visible on the front of the raceway.

The bottom wall of the raceway internally features a longitudinal groove located in central position, in which both the screws used to fix the raceway to the wall and the screws used to fix the boxes and all the other accessories that are usually contained in the raceway can be inserted.

Finally, it must be noted that the back of the bottom wall of the raceway features two shaped longitudinal grooves, located on the upper and lower edge, respectively, which are suitable to create two niches where the lower or upper edge of the panels used to line the wall section comprised between the bases and the cabinets of the modular kitchen can be fit, if necessary. If not used for the above purpose, the niches can be concealed by means of shaped strips which are fitted onto the body of the raceway which is provided with suitable projecting parts to hook the strips.

For major clarity the description of the raceway according to the invention continues with reference to the enclosed drawings which are intended for purposes of illustration and not in a limiting sense whereby:

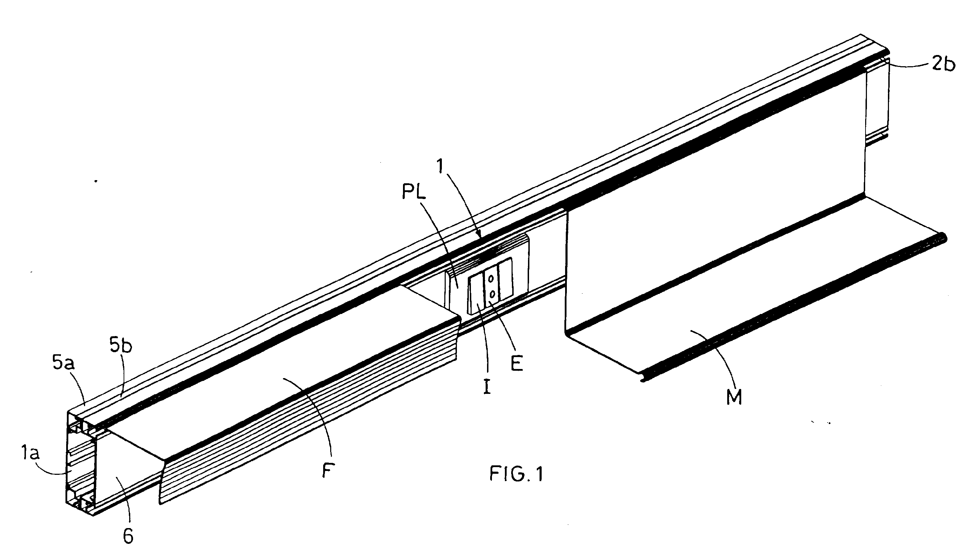

- fig. 1 is an axonometric view of a section of the raceway according to the invention equipped with a tool-holder shelf, a screen and an electrical socket with built-in switches;
- fig. 2 is a cross-section of the raceway shown in fig. 1 with a tool-holder shelf;
- fig. 3 is the cross-section of the raceway shown in fig. 1 near the electrical socket with built-in switches;
- fig. 4 is a cross-section of the raceway shown in fig. 1 with the screen;
- fig. 5 is a cross-section of the raceway according to the invention which holds a panel (with low thickness) used to line the wall on which the raceway is fixed;
- fig. 6 is a cross-section of the raceway according to the invention which holds a panel (with high thickness) used to line the wall on which the raceway is fixed;
- fig. 7 is the cross-section of the raceway according to the invention.

With reference to the above figures, the raceway according to the invention consists in a C channel (1) made up of a vertical back wall (1a) and two opposed horizontal longitudinal sides (1b).

Each longitudinal side (1 b) features longitudinal elements (1c) which create a duct (2) with rectangular cross-section having a pair of internal opposed longitudinal ribs (2a), while the front of the duct features a through slot (2b) used to insert thin elements that can be hooked to the ribs (2a).

The back wall (1a) features longitudinal elements (1d) which create a longitudinal duct (3) with "C"-shaped cross-section, used to fix the various accessories that can be installed in the raceway according to the invention.

Both the upper and the lower corner of the back wall (1a) feature a longitudinal groove (4) having a profile with two steps (4a and 4b) suitable to create a niche (N) when the raceway is fitted against the wall.

When not used, the niche is dosed with two removable parallel strips (5a and 5b).

As a matter of fact, the two strips (5a and 5b) are molded from a single piece, which is divided in two separate strips (5a and 5b), if necessary.

It must be noted that the two strips are not used when the channel (1) holds the panels used to line the wall on which the raceway is fitted.

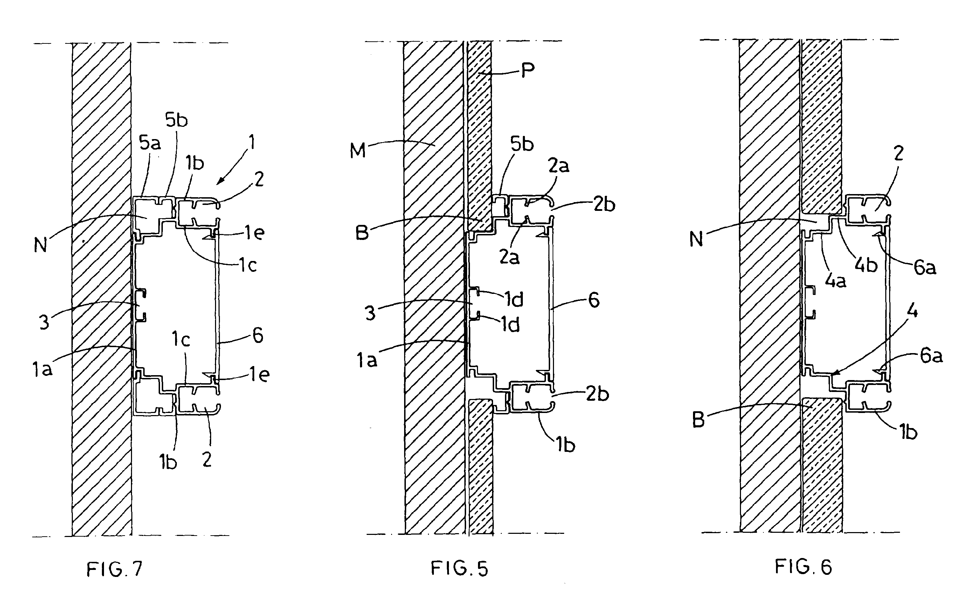

With particular reference to fig. 5, it can be noted that the raceway can be used to hold against the wall (M) a thin lining panel (P) whose edges are fitted (B ) into the niche (N) created between the wall and the channel (1). If the thickness of the panel is lower than the width of the niche (N), as shown in fig. 5, the empty space between the panel and the back of the channel (1) can be covered and concealed with a finishing strip (5b).

It is obvious that if the thickness of the lining panel is equal to the width of the niche (N), as shown in fig. 6, the strips (5a and 5b) are not mounted on the back of the channel (1).

A flat strip (6) is inserted in the front between the two longitudinal sides (1 b) of the channel (1), provided with internal teeth (6a) able to fit to the corresponding projecting parts (1e) located on the internal side of the wings (1b).

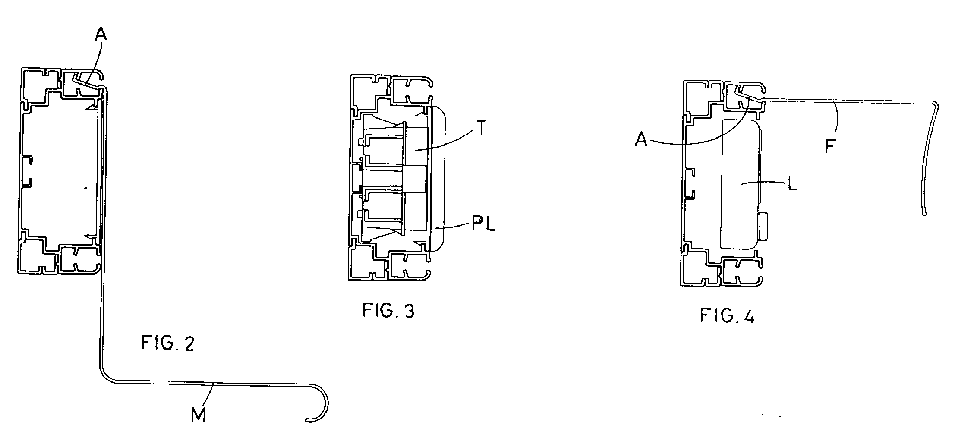

The strip (6) covers the front of the channel (1), which features the two longitudinal slots (2b) located on the front edge of the longitudinal sides (1 b). To this end, reference is made to figures 2 and 4, showing how the slots (2) can be used to hook onto the channel (1) various accessories, as long as they are provided with thin hooks (A) that can be inserted through the slots (2b) and hooked to the ribs (2a).

In particular, figures 2 and 4 show a shelf (M) and a screen (F) hooked onto the raceway according to the invention, respectively. Moreover, fig. 4 shows a schematic view of a lampholder box (L) housed inside the internal compartment of the channel (1), which is not covered with the flat strip (6) in the insertion point of the box, since the height of the box (L) is exactly the same as the distance between the longitudinal sides of the raceway. When boxes with lower height are used, the strip (6) can be provided with an opening having the same dimensions as the box, as shown in fig. 3, which is a schematic view of a box (T) for electrical switches (I) and sockets (E), recessed inside the raceway.

Additionally, fig. 3 shows the external plate (P), which is normally provided, on the boxes (T). In this application the plate (PL) is used to finish the opening made on the strip (6).

## Claims

1. Multi-purpose equipped raceway, characterized in that it consists in a C channel (1) made up of a vertical back wall (1a) and two opposed horizontal longitudinal sides (1b) internally provided with longitudinal elements (1c) which create a duct (2) with rectangular cross-section having a pair of internal opposed longitudinal ribs (2a), while the front of the duct features a through slot (2b) used to insert thin elements that can be hooked to the ribs (2a); it being provided that a flat strip (6) is inserted between the two longitudinal sides (1b) of the channel (1), provided with internal teeth (6a) able to fit to the corresponding projecting parts (1e) located on the internal side of the wings (1b).

2. Multi-purpose equipped raceway according to the previous claim, characterized in that the back wall (1a) internally features longitudinal elements (1d) which create a longitudinal duct (3).

3. Multi-purpose equipped raceway according to the previous claim, characterized in both the upper and the lower corner of the back wall (1a) feature a longitudinal groove (4) having a profile with two steps (4a and 4b) closed with two removable parallel shaped strips (5a and 5b).
